# EUROPÄISCHE PATENTSCHRIFT

(11) **EP 0 865 462 B1**
(45) Veröffentlichungstag und Bekanntmachung des Hinweises auf die Patenterteilung: **11.07.2001**
(21) Anmeldenummer: 96943056.0
(22) Anmeldetag: 07.12.1996
(51) Int. Cl.: C08J 9/232, B29C 44/18

(54) **VERFAHREN ZUR HERSTELLUNG EINES MATERIALS AUS KUNSTSTOFF-BEADS**
PROCESS FOR THE PREPARATION OF A MATERIAL MADE FROM PLASTIC BEADS
PROCEDE DE FABRICATION D'UN MATERIAU REALISE A PARTIR DE PERLES DE PLASTIQUE

(30) Priorität: 09.12.1995 DE 19545737; 11.03.1996 DE 19609361
(43) Veröffentlichungstag der Anmeldung: 23.09.1998
(73) Patentinhaber: Gefinex Gesellschaft für Innovative Extrusionsprodukte mbh, 33803 Steinhagen (DE)
(72) Erfinder: BRUNING, Jürgen, D-33824 Werther (DE)
(74) Vertreter: Kaewert, Klaus
(86) Internationale Anmeldenummer: EP9605483
(87) Internationale Veröffentlichungsnummer: WO9721766

(56) Entgegenhaltungen:
- EP-A- 0 425 886
- US-A- 3 242 238
- US-A- 4 783 288

## Beschreibung

Die Erfindung betrifft ein Material, bestehend ganz oder teilweise aus Kunststoff-Beads, insbesondere bestehend aus mehreren Schichten. Mehrschichtige Materialien sind für Bauzwecke bekannt. Dabei werden Kunststoffschaumschichten unterschiedlicher Beschaffenheit miteinander verbunden. Die Verbindung kann eine bloße Klebeverbindung, aber auch eine Schweißverbindung sein. Darüber hinaus ist es bekannt, die einzelnen Schichten miteinander mechanisch zu verankern.

Mit derartigem Schichtenaufbau lassen sich hohe Festigkeiten erreichen. Jedoch ist die Festigkeit nicht in allen Fällen entscheidend. Die Erfindung geht davon aus, daß die Nachgiebigkeit der Oberfläche von gleicher Bedeutung sein kann. Der Erfindung liegt auch die Aufgabe zugrunde, die Herstellung von Kunststoffmaterial zu vereinfachen und das Material zu verbessern.

Nach der Erfindung wird das mit Hilfe einer Schicht erreicht, die ganz oder teilweise aus Beads besteht.

Beads sind Kunststoffschaumperlen/Partikal, die zu beliebigen Formen verarbeitet werden können. Derartige Perlen/Partikal können auf verschiedene Weise erzeugt werden.

Ein Weg ist die Erzeugung im Autoklaven. Dabei wird Ausgangspartikel unter Druck, Wärme und Bewegung des Bades mit einem Treibmittel versetzt. Durch schlagartiges Öffnen des Autoklaven gegen einen Behälter mit vergleichsweise geringem Druck werden die mit Treibmittel beladenen und warmen Kunststoffpartikel mit hoher Geschwindigkeit aus dem Autoklaven ausgetragen. Die Partikel schäumen unter dem wirksam werdenden Innendruck auf. So entstehen Beads.
Bei diesem Verfahren ist eine aufwendige Chemiewirtschaft zu treiben. Ferner sind für die batchweise Partikelherstellung großvolumige Anlagen erforderlich. Durch notwendige druckfeste Auslegung ergibt sich ein erheblicher Apparateaufwand.

Ein anderer, neuer und bisher in der Praxis noch nicht beschrittener Weg zur Erzeugung der Kunststoffschaumperlen ist die Extrusion feiner Kunststoffschaumstränge mit anschließender Granulierung. Die Extrusion soll ähnlich der üblichen Kunststoffschaumextrusion wie zum Beispiel der Kunststoffschaumplattenherstellung sein. Bei der üblichen Kunststoffschaumextrusion wird mittels eines Extruders ein Kunststoffschaumstrang aus einer geeigneten Kunststoffschaumeinsatzmischung erzeugt. Aus dem Kunststoffschaumstrang werden dann z.B. Platten konfektioniert.

Der Extruder besteht aus einer oder mehreren Schnecken, die in einem Gehäuse umlaufen. Extruder mit einer Schnecke sind Einschneckenextruder. Extruder mit zwei Schnecken werden als Doppelschneckenextruder bezeichnet. Darüber hinaus sind Planetwalzenexstruder als Mehrschneckenextruder bekannt. Die verschiedenen Schnecken eines Mehrschneckenextruders kämmen entweder unmittelbar oder über andere Schnecken mittelbar miteinander.

Bevorzugte Kunststoffe sind bei der bekannten Plattenherstellung Polyethylen und Polystyrol. Der Kunststoff wird in Granulatform mit Zuschlägen in den Extruder gegeben. Die Zuschläge sind Füllstoffe, Nukleierungsmittel (Keimbildungsmittel) und anderes. Ferner wird ein Treibmittel zugesetzt. Das Treibmittel war in früherer Zeit FCKW, das zwar ein problemloses Schäumen ermöglicht hat, aber wegen seiner Umweltbelastung nicht weiterverwendet wird. Statt der FCKW-Treibmittel sind HFCKW-Treibmittel entwickelt worden und zum Einsatz gekommen. Darüber hinaus besteht das Bemühen, zu einer Praxisanwendung von HFCKW-freien Treibmitteln zu kommen. Derartige Treibmittel sind an sich bekannt, z.B.Kohlendioxid (CO2), Propan, Butan, Pentan und anderes. Ihre Anwendung setzt jedoch erhebliche Schwierigkeiten.

Das Treibmittel kann mit dem Kunststoffgranulat in fester Form aufgegeben werden. Wahlweise wird das Treibmittel in flüssiger oder gasförmiger Form auf der Verarbeitungsstrecke/Extrusionsstrecke dem Extruder zugegeben.

Im Extruder durchläuft das Material verschiedene Verarbeitungsphasen: Plastifizierungsphase, Homogenisierungsphase und Dispergierphase, Kühlphase. Die Bezeichnungen der einzelnen Phasen beschreiben die Vorgänge im Extruder. In der Schluß- und Kühlphase wird die Schmelze vor dem Extruderwerkzeug/Extruderdüse auf Extrusionstemperatur/Austrittstemperatur abgekühlt. Die austretende Schmelze wird durch das in der Schmelze verteilte Treibmittel feinzellig aufgeschäumt. In diesem Zustand verbleibt die Schmelze nach ihrer Abkühlung.

Bei der vorstehend beschriebenen bekannten Extrusion von Kunststoffschaumplatten hat die Düse üblicherweise die Form eines länglichen Schlitzes. Die Abmessungen ergeben sich aus dem Aufschäumgrad/Faktor der Schmelze.

Zur Herstellung von Beads durch Extrusion werden zunächst dünne Kunststoffschaumstränge mittels einer Lochdüse als Extrusionswerkzeug erzeugt. Die Lochdüse besitzt eine Vielzahl nebeneinander angeordneter feiner Durchtrittslöcher.
Die sich bildenden dünnen Kunststoffschaumstränge werden unmittelbar nach dem Austritt aus der Extruderdüse in kurzen Abständen abgelängt. Durch das Ablängen fallen Partikel/Perlen an, die bei rundem Lochquerschnitt die Form kleiner Zylinder aufweisen. Die Beads können auch die Form von Kugeln oder Linsen haben.

Die EP 0425886 A2 beschreibt die Herstellung von Beads durch Extrusion und deren Verwendung nach Imprägnieren mit einem Trennmittel. Diese Druckschrift beschreibt diverse Zusammensetzungen der Beads und des Treibmittels. Im Vordergrund steht dabei die Anwendung von Mikrowellen zum Verschweißen der Beads in einem Formhohlraum. Auf eine mehrschichtige Schaumherstellung ist aus dieser Druckschrift kein Hinweis zu entnehmen.

Die US-PS 3242238 beschreibt die Herstellung von Sandwichprodukten, wobei ein Kunststoffschaumkern Anwendung findet. Zwar ist dieses Material auch für Verpackungszwecke vorgesehen. Das bekannte Material besitzt jedoch keine geeignete Nachgiebigkeit für oberflächenempfindliche Güter bei gleichzeitiger hoher Festigkeit. Vielmehr zeichnen sich Sandwichmaterialien durch besondere Oberflächenschichten aus, die für oberflächenempfindliche Güter nicht geeignet sind.

Aufgabe der Erfindung ist es, ein Material herzustellen, das zugleich eine vorteilhafte Festigkeit besitzt und für oberflächenempfindliche Güter geeignet ist.Diese Aufgabe wird gelöst durch die Herstellung eines Verbundmaterials mit den Merkmalen des Anspruches 1.

Dabei vereinigen das Propylen und das Polyproplen (PP) gegenüber Polethylen und Polystyrol verschiedene vorteilhafte Eigenschaften bei geringen Gestehungspreisen für den Rohstoff in sich. Insbesondere ist PP warmfester und verschleißfester, auch biegefester. Diese Eigenschaften sind seit langem bekannt. Gleichwohl ist PP in der Vergangenheit nicht unbedingt in die engere Wahl der Kunststoffschaumhersteller gekommen. Das ist darauf zurückzuführen, daß PP als Schaum nur sehr schwierig herzustellen ist. PP besitzt nur ein relativ kleines Temperaturfenster.
Die Erfindung hat sich gleichwohl diesem Werkstoff in der Anwendung auf Beads zugewandt, obwohl bei der Beadsverarbeitung noch einmal die gleichen Schwierigkeiten (sehr enges Temperaturfenster) auf den Verarbeiter beim Verschweißen warten.

Das nach der Erfindung bevorzugt verwendete Ethylen-Propylen-Block-Copolymer hat einen Ethylenanteil von 2 bis 18 Gew%. Zusätzlich kann das Copolymer noch andere Bestandteile, z.B. Butylen oder Stabilisatoren aufweisen. Mit den Stabilisatoren kann die Warmfestigkeit erhöht werden.
Mit dem erfindungsgemäß vorgesehenen Copolymer wird insbesondere ein weicher/nachgiebiger Schaum mit einem Raumgewicht von 5 bis 49 kg pro Kubikmeter und ein fester Schaum mit einem Raumgewicht von 151 bis 500 kg pro Kubikmeter erzeugt.

Die Nachgiebigkeit der Beads kann auch durch Schrumpelung beeinflußt werden. Nach der Erfindung erfolgt die Schrumpelung der Beads mit Hilfe einer Wärmebehandlung. Vorzugsweise wird im Dampf geschrumpelt. Der Dampf kann ein Wasserdampf aber auch anderer Dampf/Gas sein. Entscheidend ist dabei die Änderung des Aggregatzustandes von flüssig in gasförmig. In dieser Phase reagieren Beads aus Ethylen-Propylen-Block-Copolymer oder einem vergleichbaren Kunststoff sehr stark. Das gilt sowohl für das Schrumpeln als auch für die Rückbildung. Das wird darauf zurückgeführt, daß die Dämpfe in der oben beschriebenen Phase leicht in die Beads eindiffundieren. Eine nachfolgende Abkühlung führt dann am Beispiel des Dampfes zu einer erneuten Aggregatzustandsänderung. Der Dampf kondensiert zu Wasser. Dabei entsteht ein erheblicher Unterdruck in den Beads. Die Beads falten sich unter dem Umgebungsdruck der Luft ein. Die Beads werden Schrumpelbeads. Ihre Oberfläche ist extrem weich.

Die Rückbildung der Beads erfolgt gleichfalls im Dampf, und zwar mit gerade aus einer Aggregatzustandsänderung anfallendem Dampf. Der Dampf dringt wiederum in kürzester Zeit in die Beads ein und führt dort zu einer Expansion.
Bei drucklosem Wasserdampf erfolgt die Schrumpelung bzw. die Rückbildung der Beads bei einer Dampftemperatur von 95 bis 100 Grad Celsius.

Die Beads werden in einem Formteilautomaten miteinander verbunden. Die Verbindung erfolgt dadurch, daß die Oberfläche der Beads mittels Dampf erwärmt und angeschmolzen wird. Zugleich dringt der Dampf in die Beads ein, so daß die Beads sich erwärmen und expandieren. Dadurch werden die plastifizierten Oberflächen aneinandergedrückt und je nach Druck und Temperatur miteinander verschweißt oder versintert oder nur verklebt. Zum Verschweißen wird eine stärkere Aufschmelzung der Oberfläche benötigt als zum Versintern. Dafür ist der notwendige Schweißdruck sehr viel geringer als der notwendige Sinterdruck. Beide Verbindungen können eine ausreichende Festigkeit entwickeln.
Üblicherweise entsteht bereits bei Bedingungen, die weder für eine Verschweißung noch für eine Versinterung ausreichen, eine Verklebung. Diese Verklebung kann in Einzelfällen schon eine ausreichende Festigkeit entfalten.
Durch die Verbindung der Beads an den Berührungsstellen halten die Beads sich, d.h. stabilisieren sich die Beads gegenseitig in der Form, die sie zum Zeitpunkt der Erfindung einnehmen.

Obige Heißdampftechnik lehnt sich an die aus der Verarbeitung von Polystyrol-Beads bekannte Heißdampftechnik an. Dabei wird Heißdampf mit entsprechendem Druck so lange durch den Formteilautomaten gedrückt, bis die gewünschte Erwärmung entstanden ist. Der für die erfindungsgemäßen Beads aus Ehtylen-Propylen-Block-Copolymer erforderliche Druck liegt bei 4 bis 8 bar, vorzugsweise 6 bar und einer Temperatur von 140 bis 170 Grad Celsius, vorzugsweise 160 Grad Celsius.

Außerdem sieht die Heißdampftechnik vor, daß die Beads bereits mit entsprechendem Druck in den Formteilautomaten gefüllt werden und zwar solange, bis der Hohlraum des Formteilautomaten vollständig ausgefüllt ist. Andernfalls sucht sich der Dampf den Weg des geringsten Widerstandes durch den verbliebenen Hohlraum an den Beads vorbei.

Für die Anwendung der Heißdampftechnik kann auch ein Nachschäumen der Beads erforderlich werden. Beim Nachschäumen werden die Beads in einer Vorbehandlungsstation (Behälter) wiederum mit Heißdampf auf eine Volumensgröße gebracht, bei der sich unter Beibehaltung der oben angesprochenen Druckgrenzen mit dem gewünschten Raumgewicht eine vollständige Füllung des Formhohlraumes im Formteilautomaten ergibt.
Zum Nachschäumen können die Beads mit Treibmittel beladen werden. Das Treibmittel ist im einfachsten Fall Luft, die unter Druck in die Beads eindringt. Die Druckbeladung bedingt ein Druckgefäß. Nach der Druckbeladung werden die Beads unter Aufrechterhaltung des Druckes in den Behälter gefüllt und mit Heißdampf bedampft. Der Heißdampf bewirkt eine Erwärmung der Beads auf Nachschäumtemperatur und eine gleichzeitige Erwärmung des eingeschlossenen Treibmittels. Das Treibmittel gerät dadurch unter erhöhten Druck. Durch Belüftung des Behälters, d.h. Druckreduzierung im Behälter, wird der Gesamtdruck des eingeschlossenen Treibgases wirksam. Es entsteht das Nachschäumen.

Ein anderes Verfahren sieht die Verwendung von Mikrowellen zur Verschweißung der Beads vor. Das heißt, die notwendige Erwärmung der Beads wird mit Hilfe von Mikrowellen erzeugt. Dabei ist zu berücksichtigen, daß z.B. die oben beschriebenen PP-Beads (Polypropylen-Beads) zu geringe dielektrische Eigenschaften haben, als daß sie auf Mikrowellen nennenswert reagieren. Dieses Kunststoff-Material wird als nicht aktiv bezeichnet. Um gleichwohl die Erwärmung an der Oberfläche herbeizuführen, werden die Beads nach der Erfindung mit einem aktiven (auf Mikrowellen reagierenden) Material beschichtet oder benetzt. Ein überall vorhandenes und leicht zugängliches Material ist Wasser. Am besten verhält sich oberflächenentspanntes Wasser. Die gewünschte Entspannung kann mit Tensiden und z.B. mit Haushaltsspülmitteln erreicht werden. Die Benetzung der Beads erfolgt im Wasserbad oder durch Bedüsen mit Wasser. In dem geschlossenen Formteilautomaten bewirken die Mikrowellen eine Erwärmung und Verdampfung des Wassers bis die gewünschte Temperatur und der gewünschte Druck errreicht sind. Vorzugsweise wird die notwendige Wassermenge anhand der Dampfmenge bestimmt. Bei zu geringer Dampfmenge werden weder der notwendige Druck noch die notwendige Temperatur erreicht. Das läßt sich anhand des Schweißergebnisses kontrollieren. Bei zu schwacher Erwärmung wird mehr Wasser zugegeben. Bei zu starker Erwärmung wird das Wasser reduziert.

Mit einigen Versuchen kann die für jeden Werkstoff optimale Wassermenge bestimmt werden.
In der Regel wird die Wassermenge 1 bis 40Vol% des Beadsvolumens sein.

Günstig ist es, wenn die notwendige Wassermenge nicht als Wassersumpf in der Form steht, sondern insgesamt auf der Beadsoberfläche verteilt ist. Das läßt sich durch Verdickung des Wassers erreichen. Mit verdicktem Wasser kann eine dickere Wasserschicht an den Beads gebildet werden.
Die gewünschte Verdickung läßt sich z.B. mit Kieselgur erreichen, desgleichen mit Methylcellulose oder Saugmitteln, mit denen sich eine Art Wasserpaste erzeugen läßt.

Neben Wasser und/oder auch in Mischungen sind auch Glycerin bzw. Polyiole und Glykole als aktive Materialien anwendbar. Dabei handelt es sich um polare (dielektrische) Materialien.

Für die Mikrowellentechnik wird nach der Erfindung vorzugsweise ein nicht aktives oder nur ein gering aktives Formenmaterial verwendet. Geeignete Materialien für die Form sind z.B. Phenolharze. Geeignet kann auch ein Polymerbeton sein.
Bei Verwendung von nicht aktiven oder nur gering aktiven Formmaterialien kann eine Heizschicht an der Innenwand der Form von Vorteil sein. Die Heizschicht kann ein aktives Material sein. Mit der Heizschicht kann einem Temperaturabfall an der Außenwand des Formkörpers entgegengewirkt werden. Der Temperaturabfall hat sonst zur Folge, daß die Beads nur schlecht oder nur unvollständig oder gar nicht miteinander verschweißen. Das führt zu starken Oberflächenfehlern.
Wahlweise kann die Heizschicht auch zu einer Temperaturerhöhung genutzt werden. Das führt zu einer Verhautung der Formkörper, die gewünscht sein kann. Das kann z.B. bei Stoßfängern der Fall sein, um den Kunststoffschaum vor einem Eindringen von Wasser zu schützen oder eine Grundlage für eine Lackierung zu bilden.
Günstig ist es, die Heizschicht mit einer von der Erwärmung der Beads unabhängigen Temperaturführung zu versehen.
Wahlweise wird die gewünschte Temperatur an der Forminnenwand auch dadurch erreicht, daß ein aktives Formmaterial mit einer innenwandseitig angeordneten Kühlung vorgesehen ist. Die Kühlung kann eine Luftkühlung sein.

Vorteilhafterweise kann bei der Anwendung von Mikrowellen auf eine vollständige Füllung des Formhohlraumes verzichtet werden. Es können z.B. Standard-Beads einer Größenordnung, mit der sich alle gewünschten Raumgewichte für einen oder mehrere Formkörper darstellen lassen, verwendet werden. Dann werden je nach gewünschtem Raumgewicht eines Formkörpers mehr oder weniger (z.B. mit Wasser benetzte) Beads in den Formhohlraum gefüllt, ohne den Formhohlraum vollständig auszufüllen. Die Beads schäumen nach ihrer Erwärmung zunächst auf, bis der Formhohlraum ausgefüllt ist. Danach kommt es zu der gewünschten Druck- und Temperaturerhöhung.
Die Steuerung des Schweißvorganges kann anhand des Druckes in der Form erfolgen. Wahlweise wird dabei ein Druckventil eingesetzt, das bei Erreichen eines bestimmten Druckes betätigt wird und eine Zeitglied in Gang setzt, welches die Mikrowellen nach einem vorher bestimmten Zeitraum abstellt.

Vorteilhafterweise entfällt bei dieser Technik das oben erläuterte Nachschäumen. Für das Verfahren mit teilweiser Füllung des Formhohlraumes sind besonders die geschrumpelten Beads von Vorteil. Die geschrumpelten Beads zeigen ein eigenwilliges Verhalten. Sie expandieren im Dampf unter einer bestimmten Temperatur fast schlagartig wieder auf ihr Ursprungsvolumen (vor dem Schrumpeln).
Bei geschrumpelten Beads wird es also zunächst zu einer langsamen Expansion unter der Mikrowellenerwärmung kommen, bis die genannte Temperatur erreicht wird. Bei dieser Temperatur füllt sich der Formhohlraum schlagartig. Daran schließt sich die gewünschte Temperatur- und Druckerhöhung an.

Die extrudierten Beads haben vorzugsweise einen Durchmesser von O,5 bis 15 mm. Die Beadsdurchmesser können unterschiedlich oder für bestimmte Formkörper gleich sein. Wahlweise ist das Raumgewicht der Beads unterschiedlich oder gleich. Für die oben erläuterte Bedampfung mit Heißdampf kann es einfacher sein, das Raumgewicht der Beads unter Beibehaltung anderer Rahmenbedingungen dem gewünschten Formkörper-Raumgewicht anzupassen. Die Herstellung der Beads mittels Extrusion hat den Vorteil, daß der Extruder relativ leicht eine Änderung des Raumgewichtes ermöglicht.

Günstig ist es, für kleinere Schichtdicken kleinere Beads zu verwenden. Das wird am Beispiel eines Formkörpersteges deutlich: Die untere Grenze für die Dicke eines Formkörpersteges ist die Dicke der Beads. Das heißt, bei einem Beadsdurchmesser von 6 mm kann die Dicke eines aus diesen Beads herzustellenden Formkörpersteges nicht kleiner als 6 mm sein (aus Gründen der Vereinfachung ist der Druck und die damit verbundene Volumensbeeinflussung der Beads dabei unberücksichtigt geblieben).
Außerdem ist die Qualität eines Steges, in dem z.B. zwei 3mm-Beads in der Richtung quer zur Wand nebeneinander liegen, größer als die eines gleich dicken Steges aus 6mm-Beads. Allein schon die außen deutlichen Zwickelräume zwischen den Beads beeinflussen die Oberflächenqualität.
Noch stärkere Unebenheiten der Oberfläche ergeben sich mit den großen Beads, wenn die Stegdicke kein ganzteiliges Vielfaches der Beadsdicke ist.

Die kleineren Beads sind auch für einen mehrschichtigen Formkörper vorteilhaft. Bei einem mehrschichtigen Formkörpern werden für die dünneren Schichten vorzugsweise die Beads mit dem kleinen Durchmesser verwendet. Es ist günstig, die dünneren, außen liegenden Schichten als Festigkeitsschichten auszubilden. Für diese Schichten wird dann gegenüber den anderen Schichten ein höheres Raumgewicht gewählt.
In diesem Sinne können z.B. für die Festigkeitsschicht 0,5 bis 5mm Schichtdicke und für die anderen Schichten Dicken bis 300 mm, vorzugsweise 100 mm, Anwendung finden. Die Beads haben in der Festigkeitsschicht in der Regel kleineres Volumen als in einer Nachgiebigkeitsschicht. Dort sind Beadsdurchmesser bis 15 mm vorgesehen.

Wahlweise ist als letzte äußere Schicht z.B. für Verpackungsmaterial auch eine dünne Nachgiebigkeitsschicht aus geschrumpelten Beads vorgesehen.

Die **Beadsschicht** kann mit einer weiteren Beadsschicht als Festigkeitsschicht, aber auch mit einer einstückig extrudierten bzw. hergestellten Kunststoffschaumschicht wie auch mit einer ungeschäumten Festigkeitsschicht aus Kunststoff kombiniert werden.
Die Verwendung extrudierter Beads erlaubt es, auch wesentlich schwerere Qualitäten zu erzeugen. Gemeint ist Schwerschaum mit einem Raumgewicht von bspw. 200 (im Extremfall bis 500) kg pro Kubikmeter.

Ein weiterer Vorteil der Verwendung extrudierter Beads ist die Möglichkeit kleiner Chargen. Mit den bekannten Autoklavsystemen sind nur große Chargen wirtschaftlich darstellbar. Das bedingt eine relativ große Vorratshaltung und schließt das Angebot von Spezialitäten mit geringer Nachfragekraft aus.

Eine weitere Variante zur Verarbeitung der Beads sieht vor, daß die Beads ohne wesentliche Beladung mit Treibmittel lediglich komprimiert und unter Druck in die Form gefüllt werden.
Dabei kann die Volumensverringerung z.B. 50% gegenüber dem Ausgangsvolumen betragen. Bei diesem Verfahren dient die Volumensverringerung dazu, die Beads in die zur Herstellung des Formteiles vorgesehene Form einzufüllen, d.h. dem Volumen des Formhohlraumes anzupassen. Die Verbindung der Beads erfolgt wie oben erläutert durch Verschweißen, Versintern oder nur durch Verkleben.

Die Verarbeitung der Beads in der erfindungsgemäßen Form kann unterschiedlich erfolgen. Die einschichtige Herstellung ist bereits oben erläutert. Bei einer mehrschichtigen Herstellung ist die separate Herstellung von Schichten bildenden Formkörpern aus Beads und deren Verbindung eine Möglichkeit. Die Verbindung kann durch Kleben, noch besser durch Schweißen erfolgen. Zum Kleben eignet sich z.B. ein Heißkleber. Das Schweißen erfolgt durch Anschmelzen der Berührungsflächen. Zum Anschmelzen können Wärmestrahler oder Heißluftgebläse dienen.
Alternativ zu den Wärmestrahlern und Heißluftgebläsen kann auch eine Verschweißung der Schichten mit Mikrowellen erfolgen. Das Verschweißen mit Mikrowellen ist von Vorteil, wenn die miteinander zu verbindenden Schichten aus nicht aktivem Kunststoffschaum bestehen. Dann werden die bereits fertigen Schichten nicht mehr durch die Mikrowellen verändert. Die Schweißflächen können mit Hilfe eines aktiven Benetzungs- oder Beschichtungsmaterials erwärmt werden. Solches Material soll ein trockenes Material, z.B. Ruß oder staubförmige Kohle sein. Ruß und staubförmige Kohle entwickeln jedoch sehr starke Wirkungen, so daß nach der Erfindung nur geringe Mengen vorgesehen sind. Das kann durch Bestäuben oder sogar durch anschließende Verringerung der Schichtdicke durch Abblasen und sogar Bürsten sichergestellt werden.

Verfahrenstechnische Vorteile können sich ergeben, wenn zur Erzeugung einer mehrschichtigen Konstruktion eine oder mehrere der Schichten angeformt werden. Z.B. läßt sich eine außen liegende Festigkeitsschicht aus Beads an eine nachgiebige Kernschicht anformen. Zweckmäßigerweise erfolgt das in einem Formteilautomaten, in dem die vorhandene Schicht eingelegt und die Beads in der oben beschriebenen Weise in den verbleibenden Formhohlraum eingefüllt werden. Dabei setzt sich die Erfindung über Schwierigkeiten hinweg, die ein Durchschnittsfachmann mit der Dampf-Führung erwartet. Wie oben erläutert, muß der Dampf die Beadsschicht durchdringen, und zwar auf kurzem Wege. Dementsprechen haben bekannte Formteilautomaten nicht nur Zutrittsöffnungen für den Dampf sondern auch gegenüberliegende Abdampföffnungen. Beim Einlegen einer geschlossenen Schicht wird der Weg des Dampfes unterbrochen. Die Erfindung hat erkannt, daß gleichwohl eine dauerhafte und gleichmäßige Durchdringung der Schicht möglich ist. Nach der Erfindung wird die Schicht dazu mit einer Perforierung versehen. Die Perforierung der eingelegten Schicht kann durch eine Nadelung erreicht werden. Die durch die Perforierung geschaffenen Öffnungen sind vorzugsweise in ihrem Durchmesser auf die Öffnungsweite der Poren zwischen den Beads abgestimmt. Durch die Anzahl der Nadelstiche pro Flächeneinheit wird insgesamt ein ausreichendes Durchtrittsvolumen geschaffen. Vorteilhafterweise bewirkt der erfindungsgemäß vorgesehene Dampfdurchtritt durch die in der Form eingelegte Schicht, daß sich die Perforierung wieder schließt. Ursache sind die mit dem Dampfdurchtritt verbundene Erwärmung, Anschmelzung, Expansion und Verschweißung.

Um das Material zum Verschweißen geeignet zu machen, ist nach der Erfindung ein Verschweißungsanteil in dem Material der miteinander zu verbindenden Schichten vorgesehen. Das ist bei Kunststoff ein Mindestanteil gleicher Materialbestandteile. Einige Kunststoffe lassen sich auch mit Kunststoffen anderer Zusammensetzung verschweißen. Die Schweißfähigkeit kann leicht ausgetestet werden. Ein einziger Schweißversuch ist in der Regel schon ausreichend.

Jede Schicht kann einseitig oder beidseitig mit einem anderen Material versehen werden. Das kann in der oben erläuterten Form des Anformens einer Beadsschicht oder durch Verbindung separat gefertigter Schichten erfolgen.

Die Vorteile der Erfindung werden besonders bei Formteilen zu Verpackungszwecken oder für den Automobilbau deutlich. In beiden Anwendungsfällen kann die Festigkeitschicht auf ein minimales Maß reduziert werden, bei der sie die Anforderungen noch erfüllt. Vorteilhafterweise erlaubt das Schichtdicken von 0,5 bis 5 mm. Dabei ist es es günstig, wenn die Festigkeitsschicht selbst aus Kunststoffschaum besteht. Für die meisten Anwendungsfälle ist Kunststoffschaum mit einem Raumgewicht von 10 bis 49 kg pro Kubikmeter ausreichend. Davon unabhängig ist die Erfindung ebenso auf Festigkeitsschichten aus ungeschäumtem Kunststoff oder einem Kunststoff-Textil anwendbar. Zu den hier geeigneten Textilien gehören sowohl Gewebe als auch Vliese. Durch Vewendung gleichen bzw. verschweißbaren Kunststoffes und/oder grobe Struktur bzw. Maschigkeit können sich Beads unmittelbar mit dem Textil verbinden.

Wahlweise isst die in die Form eingelegte Schicht tiefgezogen. Ausgangsmaterial ist eine Folie, Bahn oder Platte. Alternativ kann eine flexible Folie oder Bahn in den Formteilautomaten eingelegt und mittels Beads und/oder mittels des Dampfes und/oder durch abdampfseitiges Anlegen eines Unterdruckes verformt werden. Bei einer Funktionstrennung zwischen Festigkeitsschicht und Nachgiebigkeitsschicht kann die Formgebung der Festigkeitsschicht wahlweise durch die Nachgiebigkeitsschicht erfolgen und umgekehrt. Die Schichtdicke der formgebenden Schicht beträgt dann vorzugsweise bis 100 mm.
Vorteilhafterweise kann die Beadsschicht eine einheitliche Dicke zur Platten- oder Bahnenbildung haben oder auch zur Herstellung von Formkörpern beliebig variieren. Dabei ist die erfindungsgemäße Beadsschicht nicht daran gebunden, daß die Nachbarschicht eben ist, sondern kann die Beadsschicht beliebige Formen einnehmen.
Verpackungen und Automobilteile bedingen oft komplizierteste Formen.

Wahlweise lassen sich auch rollfähige Trittschalldämmbahnen mit einer Dicke bis 15 mm oder Trittschalldämmplatten mit einer Dicke bis 50 mm herstellen, wobei das Trittschallverbesserungsmaß 20 bis 40 Dezibel beträgt.

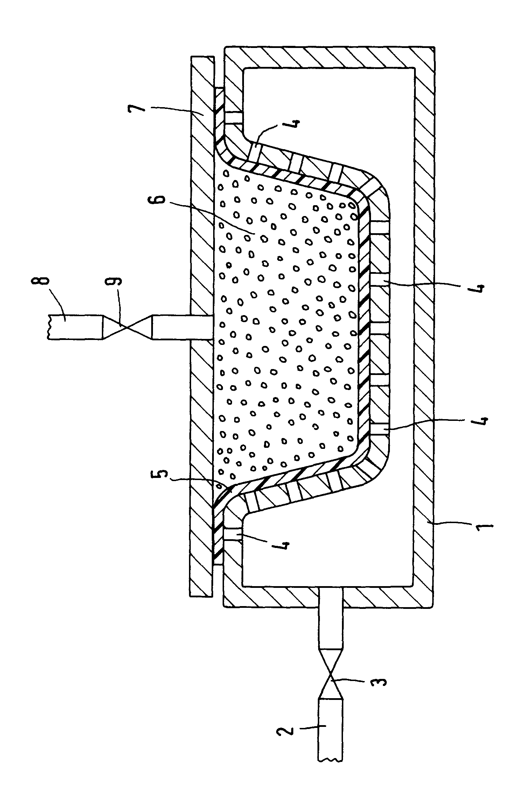

In der Zeichnung ist ein Ausführungsbeispiel der Erfindung dargestellt.

Die Zeichnung zeigt eine Tiefziehform mit einem oberen Teil 7 und einem unteren Formteil 1. In der Ausgangsstellung liegt tiefziehbarer Kunststoffschaum 5 aus EPP mit einer Dicke von 4 mm zwischen den beiden Formteilen 1 und 7, wobei am Rand eine Einspannung erfolgt. Der Kunststoffschaum hat im Ausführungsbeispiel ein Raumgewicht von 20 kg pro Kubikmeter.

Er ist vor Schließen der Form mit Wärmestrahlern auf Tiefziehtemperatur erhitzt worden. Nach Schließen der Form wird der Hohlraum unter dem Kunststoffschaum 5 durch eine Leitung 2 unter Öffnung eines Ventils 3 mit Unterdruck beaufschlagt. Das geschieht durch Abpumpen der Luft. Zugleich wird der Zwischenraum zwischen dem Kunststoffschaum 5 und dem oberen Formteil gelüftet. Beide Maßnahmen haben zur Folge, daß der Kunststoffschaum sich schließend an die Innenwand des Formteiles 1 anlegt.

Der durch die Verformung des Kunststoffschaumes 5 frei gewordene Hohlraum wird anschließend mit Beads gefüllt. Die Beads werden mit Druckluft von 6 bar durch eine Leitung 8 nach Öffnen eines Ventils 9 eingefüllt. Es handelt sich um PP-Beads mit einem Durchmesser von 3 mm.

Nach dem Einfüllen der PP-Beads werden die Beads in der Form mit Heißdampf beaufschlagt. Der Heißdampf muß durch die Beads hindurchströmen. Dabei wird die Luft zwischen den Beads verdrängt. Zugleich diffundiert der Dampf mit hoher Geschwindigkeit in die Beads ein und verdrängt auch dort die Luft. Durch den Dampf erwärmen sich die PP-Beads. Deren Oberfläche plastifiziert.
Um dem Dampf die Möglichkeit zu geben, die Beadsschicht vollständig zu durchströmen, sind in der Kunststoffschaumschicht 5 Durchtrittsöffnungen vorgesehen. Die Durchtrittsöffnungen entstehen durch Nadelung. Die Nadeln haben einen Durchmesser von 1 mm. Es sind 5 Nadeln pro Quadratzentimeter vorgesehen.

Durch die Erwärmung expandieren die Beads. Aufgrund der plastifizierten Außenflächen der PP-Beads und aufgrund des Druckes kommt es an allen Berührungsstellen zwichen den Beads und mit dem Kunststoffschaum 3 zu einer Verschweißung.

Das entstandene Kunststoffteil dient als Verpackung für empfindliche Phonogeräte. In anderen Ausführungsbeispielen werden Kfz-Teile wie Dachhimmel, Seitenverkleidungen, Hutablagen, Schall- und Wärmedämmung, Sonnenblenden, Armaturenbretter und Stoßfänger hergestellt. In weiteren Ausführungsbeispielen werden Möbel oder Koffer hergestellt. Die für Möbel bestimmten Teile werden noch mit einer Dekorschicht versehen. Die Dekorschicht wird auflaminiert/kaschiert.

## Patentansprüche

1. Verfahren zur Herstellung von Kunststoffmaterial, wobei eine erste Schaumstoffschicht mit einer zweiten Schaumstoffschicht verbunden wird und mindestens eine der Schaumstoffschichten aus Beads besteht, die zu einem Formkörper miteinander verbunden werden,
dadurch gekennzeichnet, daß Beads aus PP verwendet werden und die Beads für mindestens eine der Schichten durch Extrudieren treibmittelhaltiger Kunststoffschmelze zu dünnen Schaumstoffsträngen und deren Granulieren erzeugt werden, daß von beiden Schaumstoffschichten die eine eine Nachgiebigkeitsschicht und die andere eine Festigkeitsschicht bildet, und die Nachgiebigkeitsschicht ein Raumgewicht bis 49 kg pro Kubikmeter und die Festigkeitsschicht ein Raumgewicht von 151 bis 500 kg pro Kubikmeter hat.

2. Verfahren nach Anspruch 1, gekennzeichnet durch die Verwendung von Schrumpel-Beads.

3. Verfahren nach Anspruch 1 oder 2, gekennzeichnet durch die Verwendung eines Ethylen-Propylen-Block-Copolymers.

4. Verfahren nach Anspruch 3, gekennzeichnet durch die Verwendung eines Copolymers mit einem Ethylenanteil von 2 bis 18 Gew%.

5. Verfahren nach Anspruch 1 oder 2, gekennzeichnet durch die Verbindung der Beads mittels Mikrowellen, wobei die Beads aus einem nicht aktiven Material bestehen und mit einem aktiven Material benetzt oder beschichtet werden.

6. Verfahren nach Anspruch 5, dadurch gekennzeichnet, daß als Benetzungsmaterial ganz oder teilweise Wasser oder Glycerin und/oder Glykol verwendet wird.

7. Verfahren nach Anspruch 5 oder 6, gekennzeichnet durch die Verwendung eines verdickten Benetzungsmaterials.

8. Verfahren nach Anspruch 7, gekennzeichnet durch die Verwendung von Kieselgur oder Methylcellulose.

9. Verfahren nach einem der Ansprüche 6 bis 8, gekennzeichnet durch die Verwendung von oberflächenentspanntem Wasser.

10. Verfahren nach einem der Ansprüche 1 bis 9, dadurch gekennzeichnet, daß zur Verbindung der Beads Dampf verwendet wird und der Dampfdruck in der Form bei Verwendung von Wasserdampf für Beads aus einem Ethylen-Propylen-Block-Copolymer 4 bis 8 bar und die Temperatur von 150 bis 170 Grad Celsius beträgt.

11. Verfahren nach einem der Ansprüche 5 bis 10, gekennzeichnet durch eine teilweise Füllung des Formhohlraumes.

12. Verfahren nach Anspruch 11, gekennzeichnet durch die Verwendung von Standard-Beads einer Größenordnung für unterschiedliche Formkörper und/oder Beads mit unterschiedlichem Raumgewicht für unterschiedliche Formkörper und/oder eine Kompression der Beads zur Füllung der Form.

13. Verfahren nach Anspruch 11 oder 12, dadurch gekennzeichnet, daß
a. Schrumpelbeads eingesetzt
b. die Form nur teilweise gefüllt
c. und die Beads zunächst mit Mikrowellen rückgeformt werden,
d. bevor eine Erwärmung der Beads mit Mikrowellen zu deren Verbindung erfolgt.

14. Verfahren nach Anspruch 13, dadurch gekennzeichnet, daß die Form mit einer Druckmessung verbunden wird und bei Erreichen eines vorgewählten Druckes ein Zeitglied eingeschaltet wird, daß die Mikrowellen nach Ablauf der noch notwendigen Einwirkungszeit abschaltet.

15. Verfahren nach einem der Ansprüche 1 bis 14, gekennzeichnet durch die Verwendung von Beads mit einem Durchmesser von 0,5 bis 15 mm.

16. Verfahren nach einem der Ansprüche 1 bis 15, gekennzeichnet durch die Verwendung einer außen liegenden Festigkeitsschicht.

17. Verfahren nach einem der Ansprüche 1 bis 15, gekennzeichnet durch die Ausbildung einer Kernschicht als Nachgiebigkeitsschicht und/oder die Ausbildung einer äußeren Schicht als Nachgiebigkeitsschicht.

18. Verfahren nach Anspruch 16, gekennzeichnet durch die Herstellung einer äußeren Nachgiebigkeitssschicht aus Schrumpelbeads.

19. Verfahren nach einem der Ansprüche 16 bis 18, gekennzeichnet durch Anformen der Beads.

20. Verfahren nach einem der Ansprüche 16 bis 19, gekennzeichnet durch die Verwendung eines Verschweißungsanteils in jeder Schicht.

21. Verfahren nach einem der Ansprüche 16 bis 20, gekennzeichnet durch die Herstellung einer Schicht mit einer Dicke bis 300 mm.

22. Verfahren nach einem der Ansprüche 16 bis 21, gekennzeichnet durch die Herstellung von Beads mit einem Durchmesser bis 5 mm für die Festigkeitsschicht und einem Durchmesser bis 15 mm für die Nachgiebigkeitsschicht.

23. Verfahren nach einem der Ansprüche 16 bis 22, dadurch gekennzeichnet, daß eine der Schichten tiefgezogen und/oder mittels Unterdruck verformt und/oder mittels des Druckes von Beads verformt wird.

24. Verfahren nach einem der Ansprüche 16 bis 23, gekennzeichnet durch
a) Einlegen einer perforierten Schicht in eine Form
b) Füllen der Form mit Beads und
c) Bedampfen der Beads mit Heißdampf

25. Verfahren nach Anspruch 24, gekennzeichnet durch die Verwendung von Nadeln zur Perforierung.

26. Verfahren nach einem der Ansprüche 16 bis 25, gekennzeichnet durch
a) die separate Herstellung von Schichten aus nicht aktivem Material
b) die Beschichtung der Verbindungsflächen mit einem trockenen aktiven Material
c) Verbindung der Schichten mittels Mikrowellen

27. Verfahren nach einem der Ansprüche 1 bis 26, dadurch gekennzeichnet, daß Ruß oder staubförmige Kohle als aktives Material aufgestäubt und/oder anschließend zur Verringerung der Schichtdicke abgeblasen und/oder abgebürstet wird.

28. Verfahren nach einem oder mehreren der Ansprüche 1 bis 28, gkennzeichnet durch die Herstellung von rollfähigen Trittschalldämmbahnen mit einer Dicke bis 15 mm oder Trittschalldämmplatten mit einer Dicke bis 50mm, wobei das Trittschallverbesserungsmaß 20 bis 40 Dezibel beträgt.

29. Verfahren nach einem der Ansprüche 1 bis 28, gekennzeichnet durch die Herstellung von Verpackungsmaterial und/oder Kfz-Teilen und/oder Möbeln und/oder Koffern.

30. Verfahren nach Anspruch 29, gekennzeichnet durch die Herstellung von Seitenverkleidungen, Dachhimmeln, Hutablagen, Sonnenblenden, Armaturenbrettern, Stoßdämpfern.

31. Verfahren nach einem der Ansprüche 1 bis 30, gekennzeichnet durch eine Oberflächenkaschierung.

32. Verfahren nach einem der Ansprüche 5 bis 31, gekennzeichnet durch eine Verhautung.

33. Verfahren nach Anspruch 32, gekennzeichnet durch die Verwendung einer Form aus nicht aktivem Material mit einer aktiven Innenschicht der Form.

34. Verfahren nach Anspruch 33, gekennzeichnet durch die Verwendung einer Form aus aktivem Material und eine Kühlung der Innenschicht der Form.

35. Verfahren nach Anspruch 33 oder 34, gekennzeichnet durch eine Temperaturführung, die von der Temperatur im Formhohlraum unabhängig ist.

## Claims

1. Method for the manufacture of plastics material, in which a first foam layer is joined to a second foam layer and at least one of the foam layers consists of beads which are bonded together to form a moulded body, characterised in that beads of PP are used and the beads for at least one of the layers are produced by extruding expanding agent-containing plastics melt into thin foam strings and granulating them, in that of the two foam layers one forms a flexibility layer and the other a strength layer, and the flexibility layer has a relative density of up to 49 kg per cubic metre and the strength layer has a relative density of 151 to 500 kg per cubic metre.

2. Method according to claim 1, characterised by the use of shrunken beads.

3. Method according to claim 1 or 2, characterised by the use of an ethylene-propylene block copolymer.

4. Method according to claim 3, characterised by the use of a copolymer with an ethylene fraction of 2 to 18 wt.%.

5. Method according to claim 1 or 2, characterised by bonding the beads by means of microwaves, the beads being made of an inactive material and wetted or coated with an active material.

6. Method according to claim 5, characterised in that water or glycerine and/or glycol is used completely or partly as the wetting material.

7. Method according to claim 5 or 6, characterised by the use of a thickened wetting material.

8. Method according to claim 7, characterised by the use of diatomaceous earth or methylcellulose.

9. Method according to any of claims 6 to 8, characterised by the use of water with low surface tension.

10. Method according to any of claims 1 to 9, characterised in that steam is used to bond the beads and the steam pressure in the mould when using water vapour for beads made of an ethylene-propylene block copolymer is 4 to 8 bars and the temperature is from 150 to 170 degrees Celsius.

11. Method according to any of claims 5 to 10, characterised by partial filling of the mould cavity.

12. Method according to claim 11, characterised by the use of standard beads of an order of magnitude for different moulded bodies and/or beads with different relative density for different moulded bodies and/or compression of the beads for filling the mould.

13. Method according to claim 11 or 12, characterised in that
a. shrunken beads are used
b. the mould is only partly filled
c. and the beads are first re-formed with microwaves
d. before the beads are heated with microwaves to bond them.

14. Method according to claim 13, characterised in that the mould is connected to a pressure measuring system and on reaching a preselected pressure a timer is switched on, which cuts off the microwaves at the end of the time of action which is still necessary.

15. Method according to any of claims 1 to 14, characterised by the use of beads with a diameter of 0.5 to 15 mm.

16. Method according to any of claims 1 to 15,
characterised by the use of a strength layer on the outside.

17. Method according to any of claims 1 to 15, characterised by the construction of a core layer as a flexibility layer and/or the construction of an outer layer as a flexibility layer.

18. Method according to claim 16, characterised by the manufacture of an outer flexibility layer from shrunken beads.

19. Method according to any of claims 16 to 18, characterised by moulding the beads on.

20. Method according to any of claims 16 to 19, characterised by the use of a welding ratio in each layer.

21. Method according to any of claims 16 to 20, characterised by the manufacture of a layer with a thickness of up to 300 mm.

22. Method according to any of claims 16 to 21, characterised by the manufacture of beads with a diameter of up to 5 mm for the strength layer and a diameter of up to 15 mm for the flexibility layer.

23. Method according to any of claims 16 to 22, characterised in that one of the layers is deep-drawn and/or deformed by means of partial pressure and/or deformed by means of the pressure of beads.

24. Method according to any of claims 16 to 23, characterised by
a) laying a perforated layer in the mould
b) filling the mould with beads and
c) subjecting the beads to superheated steam.

25. Method according to claim 24, characterised by the use of needles for perforation.

26. Method according to any of claims 16 to 25, characterised by
a) the separate manufacture of layers of inactive material
b) coating of the joining surfaces with a dry active material
c) joining the layers by means of microwaves.

27. Method according to any of claims 1 to 26, characterised in that soot or dust-like coal is dusted on as the active material and/or then blown off and/or brushed off to reduce the layer thickness.

28. Method according to one or more of claims 1 to 28, characterised by the manufacture of rollable sound insulating webs for walking on with a thickness of up to 15 mm or sound insulating panels for walking on with a thickness of up to 50 mm, the degree of improvement of sound from footsteps being 20 to 40 decibels.

29. Method according to any of claims 1 to 28, characterised by the manufacture of packaging material and/or motor vehicle parts and/or furniture and/or suitcases.

30. Method according to claim 29, characterised by the manufacture of side linings, roof linings, parcel shelves, sun visors, instrument panels and bumpers.

31. Method according to any of claims 1 to 30, characterised by a surface backing.

32. Method according to any of claims 5 to 31, characterised by skin formation.

33. Method according to claim 32, characterised by the use of a mould made of inactive material with an active inner layer of the mould.

34. Method according to claim 33, characterised by the use of a mould made of active material and cooling of the inner layer of the mould.

35. Method according to claim 33 or 34, characterised by a temperature conduct which is independent of the temperature in the mould cavity.

## Revendications

1. Procédé pour la fabrication de matériau en matière synthétique, dans lequel une première couche de matière moussée est reliée à une seconde couche de matière moussée et dans lequel au moins une des couches de matière moussée est constituée de perles qui sont reliées les unes aux autres en un corps moulé,
***caractérisé en ce que*** sont utilisées des perles en PP et en ce que les perles sont produites, pour au moins une des couches, par extrusion de masses fondues de matière synthétique, contenant un produit moussant, en des minces cordes de matière moussée et par leur granulation, en ce que des deux couches de matière moussée, l'une forme une couche d'élasticité et l'autre une couche de résistance et en ce que la couche d'élasticité a une poids spécifique jusqu'à 49 kg par mètre cube et la couche de résistance a un poids spécifique entre 151 et 500 kg par mètre cube.

2. Procédé suivant la revendication 1, caractérisé par l'utilisation de perles ratatinées.

3. Procédé suivant la revendication 1 ou 2, caractérisé par l'utilisation d'un copolymère en masse d'éthylène et propylène.

4. Procédé suivant la revendication 3, caractérisé par l'utilisation d'un copolymère avec une fraction d'éthylène de 2 à 18 % en poids.

5. Procédé suivant la revendication 1 ou 2, caractérisé par la liaison des perles au moyen de micro-ondes, les perles étant constituées en une matière non active et étant mouillées ou enduites d'une matière active.

6. Procédé suivant la revendication 5, caractérisé en ce que, comme matière de mouillage, on utilise complètement ou partiellement de l'eau ou de la glycérine et/ou du glycol.

7. Procédé suivant la revendication 5 ou 6, caractérisé par l'utilisation d'une matière de mouillage épaissie.

8. Procédé suivant la revendication 7, caractérisé par l'utilisation de diatomite ou de cellulose méthylique.

9. Procédé suivant l'une des revendications 6 à 8, caractérisé par l'utilisation d'eau à basse tension superficielle.

10. Procédé suivant l'une des revendications 1 à 9, caractérisé en ce que de la vapeur est utilisée pour la liaison des perles et en ce que dans le moule, lors d'une utilisation de vapeur d'eau pour des perles en copolymère en masse d'éthylène et propylène 4, la pression de vapeur est comprise entre 4 et 8 bars et la température est comprise entre 150 et 170 degrés Celsius.

11. Procédé suivant l'une des revendications 5 à 10, caractérisé par un remplissage partiel de la cavité du moule.

12. Procédé suivant la revendication 11, caractérisé par l'utilisation de perles standard d'un ordre de grandeur pour des corps moulés différents et/ou de perles avec un poids spécifique différent pour des corps moulés différents, et/ou par une compression des perles pour le remplissage du moule.

13. Procédé suivant la revendication 11 ou 12, caractérisé en ce que:
a) des perles ratatinées sont mises en oeuvre,
b) le moule n'est rempli que partiellement,
c) et les perles sont d'abord régénérées par des micro-ondes,
d) avant qu'un chauffage des perles par micro-ondes soit effectué pour leur liaison.

14. Procédé suivant la revendication 13, caractérisé en ce que le moule est raccordé à un dispositif de mesure de pression et, lorsqu'une pression choisie au préalable est atteinte, un élément temporisé est enclenché, et en ce que les micro-ondes sont arrêtées après l'écoulement du temps d'action encore nécessaire.

15. Procédé suivant l'une des revendications 1 à 14, caractérisé par l'utilisation de perles d'un diamètre entre 0,5 et 15 mm.

16. Procédé suivant l'une des revendications 1 à 15, caractérisé par l'utilisation d'une couche de résistance disposée à l'extérieur.

17. Procédé suivant l'une des revendications 1 à 15, caractérisé par la réalisation d'une couche interne sous la forme d'une couche d'élasticité et/ou par la réalisation d'une couche externe en tant que couche d'élasticité.

18. Procédé suivant la revendication 16, caractérisé par la fabrication d'une couche d'élasticité externe en perles ratatinées.

19. Procédé suivant l'une des revendications 16 à 18, caractérisé par un façonnage des perles.

20. Procédé suivant l'une des revendications 16 à 19, caractérisé par l'utilisation d'une fraction de soudage dans chaque couche.

21. Procédé suivant l'une des revendications 16 à 20, caractérisé par la fabrication d'une couche d'une épaisseur jusqu'à 300 mm.

22. Procédé suivant l'une des revendications 16 à 21, caractérisé par la fabrication de perles d'un diamètre jusqu'à 5 mm pour la couche de résistance et d'un diamètre jusqu'à 15 mm pour la couche d'élasticité.

23. Procédé suivant l'une des revendications 16 à 22, caractérisé en ce qu'une des couches est emboutie et/ou façonnée au moyen d'un vide partiel et/ou est façonnée au moyen de la pression de perles.

24. Procédé suivant l'une des revendications 16 à 23, caractérisé par :
a) une pose d'une couche perforée dans un moule,
b) un remplissage du moule avec des perles, et
c) un passage à la vapeur des perles avec de la vapeur chaude.

25. Procédé suivant la revendications 24, caractérisé par l'utilisation d'aiguilles pour la perforation.

26. Procédé suivant l'une des revendications 16 à 25, caractérisé par:
a) la fabrication séparée de couches en matière non active,
b) l'enduction des surfaces de liaison avec une matière active sèche,
c) une liaison des couches au moyen de micro-ondes.

27. Procédé suivant l'une des revendications 1 à 26, caractérisé en ce que du noir de fumée ou du carbone pulvérulent est saupoudré en tant que matière active et/ou est soufflé et/ou brossé ensuite pour la diminution de l'épaisseur de la couche.

28. Procédé suivant l'une ou plusieurs des revendications 1 à 28, caractérisé par la fabrication de bandes d'amortissement de bruits de chocs, aptes à être enroulées, d'une épaisseur jusqu'à 15 mm ou de plaques d'amortissement de bruits de chocs d'une épaisseur jusqu'à 50 mm, la mesure d'amélioration des bruits de chocs étant comprise entre 20 et 40 décibels.

29. Procédé suivant l'une des revendications 1 à 28, caractérisé par la fabrication de matières d'emballage et/ou d'éléments de véhicules automobiles et/ou de meubles et/ou de coffres.

30. Procédé suivant la revendication 29, caractérisé par la fabrication de revêtements latéraux, des habillages de pavillon, des planches à chapeau, des pare-soleil, des planchette de garniture, des pare-chocs.

31. Procédé suivant l'une des revendications 1 à 30, caractérisé par un contrecollage de surface.

32. Procédé suivant l'une des revendications 5 à 31, caractérisé par une formation de peau.

33. Procédé suivant la revendication 32, caractérisé par l'utilisation d'un moule en une matière non active, avec une couche interne active du moule.

34. Procédé suivant la revendication 33, caractérisé par l'utilisation d'un moule en matière active et d'un refroidissement de la couche interne du moule.

35. Procédé suivant la revendication 33 ou 34, caractérisé par une commande de température qui est indépendante de la température dans la cavité du moule.
